# EUROPEAN PATENT SPECIFICATION

(11) **EP 1 070 764 B1**
(45) Date of publication and mention of the grant of the patent: **23.11.2005**
(21) Application number: 00401885.9
(22) Date of filing: 30.06.2000
(51) Int. Cl.: C22C 47/14, C22C 49/11, C22C 32/00, C22C 26/00, B26D 1/00, B26B 9/00

(54) **Blade materials containing diamond or cubic boron nitride particles for sharp-edged tools such as kitchen knife**
Diamant oder kubisches Bornitrid enthaltende Blätterwerkstoffe für scharfkantige Werkzeuge wie Küchenmesser
Matériaux de lame contenant des particules de diamant ou de nitrure de bore cubique pour outils à arête vive comme couteau de cuisine

(30) Priority: 14.07.1999 JP 23183799
(43) Date of publication of application: 24.01.2001
(73) Proprietor: Hirai, Keita, Saitama-ken (JP)
(72) Inventor: Kimiko, Sueda, Tokyo (JP)
(74) Representative: Texier, Christian

(56) References cited:
- US-A- 5 864 955
- PATENT ABSTRACTS OF JAPAN vol. 004, no. 046 (C-006), 10 April 1980 (1980-04-10) -& JP 55 018508 A (MITSUBISHI METAL CORP), 8 February 1980 (1980-02-08)
- PATENT ABSTRACTS OF JAPAN vol. 007, no. 151 (C-174), 1 July 1983 (1983-07-01) -& JP 58 061255 A (MITSUBISHI KINZOKU KK), 12 April 1983 (1983-04-12)
- PATENT ABSTRACTS OF JAPAN vol. 009, no. 283 (C-313), 9 November 1985 (1985-11-09) -& JP 60 128231 A (TATSUROU KURATOMI), 9 July 1985 (1985-07-09)
- DATABASE WPI Section Ch, Week 9507 Derwent Publications Ltd., London, GB; Class L,Page 02, AN 1995-049925[07] XP002152412 & SU 1 422 512 A (S.G. NUZHDINA ET AL), 30 May 1994 (1994-05-30)
- DATABASE WPI Section Ch, Week 198025 Derwent Publications Ltd., London, GB; Class L,Page 02, AN 1980-44257C[25] XP002152413 -& JP 55 062860 A (MITSUBISHI METAL CORP), 12 May 1980 (1980-05-12)
- DATABASE WPI Section Ch, Week 199731, Derwent Publications Ltd., London, GB; Class L, Page 02, AN 1997-340301U31], XP002152414 & RU 2 070 599 C (N PROIZN PREDPR TEMP) 20 December 1996
- DATABASE WPI Section Ch, Week 198703 Derwent Publications Ltd., London, GB; Class L,Page 02, AN 1987-020935[03] XP002152415 & SU 1 235 963 A (INST FIZIKI VYSOKIKH DAVLENY), 7 June 1986 (1986-06-07)

## Description

### BACKGROUND OF THE INVENTION

### FIELD OF THE INVENTION

The present invention firstly relates to a technical field with regard to various sharp-edged tools and blade materials thereof for living such as cooking knives, scissors, shavers and the like. The present invention secondly relates to a technical field with regard to cutlery and blade materials thereof manufactured by powder metallurgy. The present invention thirdly relates to a technical field with regard to cutlery and blade materials thereof using titanium or titanium alloy as one of principal materials. The present invention fourthly relates to sharp-edged tools and blade materials thereof using diamond particles or cubic boron nitride (CBN) particles as cutting materials of tissues and cells of organisms.

### DESCRIPTION OF THE PRIOR ART

Carbon steel has been used for various sharp-edged tools mentioned above. Stainless steel materials and so-called special stainless steel materials alloyed with special metal such as molybdenum, vanadium or the like have been recently used as blade materials. Furthermore, according to improvement of powder metallurgical techniques, kitchen knife using zirconic ceramic or titanium alloy (US-A-5 864 955) as blade materials has appeared. In the field of heavy cutting tools (JP-A-55 018 508) or blades (SU-A-1 422 512) it is common to amongs to the introduce CBN within a Ti-containing matrix phase. Similarly, JP-A-58 061 255, JP-A-55 062 860 or RU-A-2 070 599 disclose cutting tools where both CBN and Ti (as matrix metal) participate. Furthermore, fine diamonds particles are usually bonded to a metal matrix by sintering (JP-A-60 128 231).

A specific characteristic firstly required from various cutlery thus mentioned is a good cutting property. At the same time, the cutting property lasting for as long time as possible is also required. It has long been considered as common knowledge in the relative field of cutlery that the higher hardness materials has, the longer time the cutting property thereof maintains, such that improvement of higher hardness of blade materials has been concentratively studied.

Researches done by the present inventor, however, have found out that although excellency of cutting property of cutlery has a close relationship with hardness of blade materials particularly at blade tip, durability of cutting property has nothing to do directly with the hardness of blade materials. In other words, by way of example, although blade materials of zirconic ceramic has more than 1200 in its HV hardness, which is much higher in hardness than HV hardness of 700, maximum hardness of special alloyed steel including SUS steel, it is unreasonable to expect a high durability of cutting property because the blade tends to break or chip off easily. Still worse, stainless-based materials having more than 700 in HV hardness by way of heat treatment has the same problem of easy chipping at the blade as in the ceramic case. In other words, durability of cutting property has a close relationship with toughness or elasticity of blade materials instead of hardness of blade materials.

Thus, the present inventor has pursued a means where excellency and durability of cutting property of cutlery can coexist in consideration of the above-mentioned problems with regard to characteristic of sharp-edged tools such as kitchen knife, thereby enabling to obtain a good result.

### SUMMARY OF THE INVENTION

The present invention as disclosed in claim 1 solves the aforementioned problems and it is an object of the present invention to provide blade as defined in claim 1 containing diamond or cubic boron nitride particles for sharp-edged tools such as kitchen knife, portable knife, scissors, shavers and the like, wherein the blade materials consist of a predetermined amount of diamond particles or CBN particles as cutting materials for cells or tissues of animals and plants and the like.

Each of the diamond particles or CBN particles shall not exceed in particle size thereof 100µm. The blade materials are mixed with pure titanium particles or titanium alloy particles containing pure titanium having 50 weight % or more at the same time. The pure titanium or titanium alloy serves to function as matrix (media) of the diamond particles or CBN particles.

Furthermore, the blade materials are mixed with the diamond particles or CBN particles along with the pure titanium particles or titanium alloy particles to be compressively formed to a shape corresponding with at least purposive blade tip portion of cutlery. The material is then sintered under a predetermined temperature and the obtained sinter is gone through blade attachment process at a part corresponding with the blade tip portion.

There has been no blade materials component mixed with diamond or CBN of sharp-edged tools such as kitchen knife and common knife, which is not because diamond or CBN is expensive but because this material is difficult in whetting blade due to its excessive high hardness, leading manufacturers or sellers of the sharp-edged tools to indifference thereto.

However, there are cases where abrasing materials such corundum or the like is used therewith in wheel cutter blade utilized for cutting stones, concrete or the like. In this case, cutting power of the diamond or CBN is not used but strong grinding power of the diamond or CBN relative to hardened inorganic body is utilized.

Grinding of hardened substance and cutting or shearing of living tissue or cell has nothing to do therewith in terms of use purpose and physical form of use.

### BRIEF DESCRIPTION OF THE DRAWINGS

For fuller understanding of the nature and objects of the invention, reference should be made to the following detailed description taken in conjunction with the accompanying drawings in which:
Figure 1 is a schematic diagram for illustrating a front view enlarging a blade tip of blade materials according to the present invention;
Figure 2 is an enlarged sectional view of blade materials according to one applied example according to the present invention;
Figure 3 is a schematic diagram for illustrating a sectional view of specimen and a measuring device of bending resistance strength at blade materials;
Figure 4 is an enlarged sectional view of a cutter knife blade for illustrating one used example of blade materials according to the present invention; and
Figure 5 is an enlarged sectional view a blade of a kitchen knife according to another applied example of the present invention.

### DETAILED DESCRIPTION OF THE INVENTION

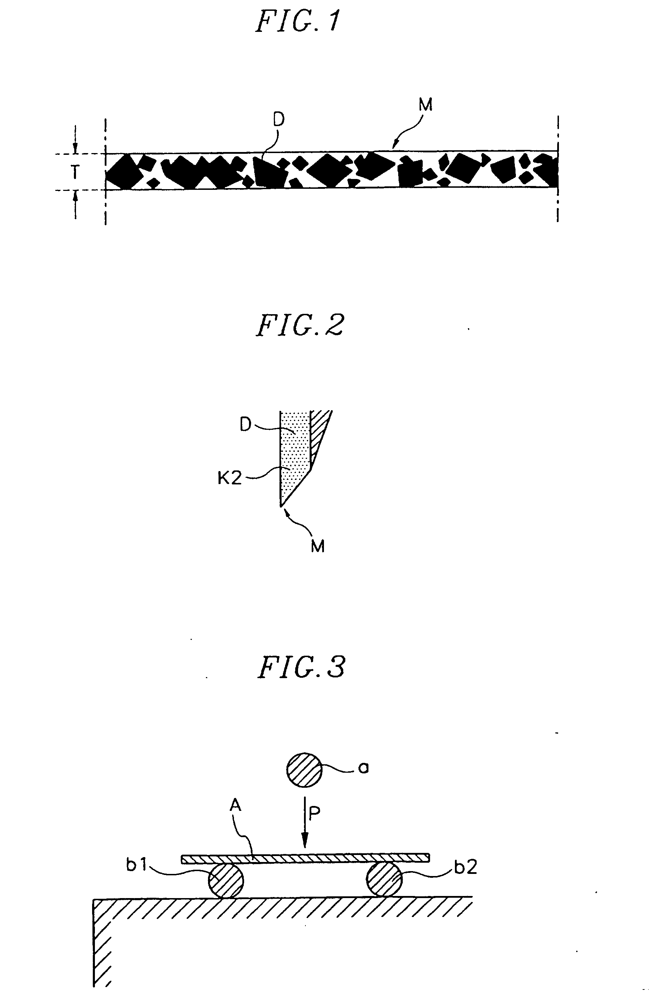

As illustrated in Figure 1, each diamond particle or CBN particle (D) mixed in the blade materials has a particle size less than 100µm. The reason is that large or small diamond or CBN particle having less than 100µm in particle size thereof is roughly arranged on an approximate straight line within a narrow scope of blade tip portion after blade attachment process, such that these particles (D) determine thickness (T) of blade tip (M), and if particle size of each particle (D) exceeds 100µm, cutting property relative to soft food stuff becomes decreased.

Mixing ratio of diamond particles or CBN particles into the blade materials differs according to kinds of food stuffs cut by blade tip of cutlery but is generally preferred to have 5-50 weight % against the total weight of blade materials. In case mixing ratio is less than 5 weight %, the blade tip has insufficient cutting property while in case the ratio exceeds 50 weight % or more, gripping power relative to the diamond particles or CBN particles of pure titanium of matrix or the titanium alloy becomes insufficient.

According to the present invention, pure titanium particles or titanium alloy containing pure titanium of 50 weight % or more is included in the blade materials as matrix to the diamond particles or CBN particles. As first and second example of titanium alloy, 6A1 4V alloy powder, pure titanium powder 50.1 weight %, alloy powder of Ni power 49.9% and the like can be cited.

Particularly, Ti alloy powder containing Ni powder is matrix to diamond particles or CBN particles to exercise a great chemical attraction toward the diamond particles or CBN particles. Furthermore, the Ti alloy powder has a great affinity to pre-nickel-coated diamond particles or CBN particles.

As one of the subjects to be solved by the present invention, improvement of durability of cutting property has been mentioned but the culprit which helps deteriorate the durability of cutting property in various cutlery thus mentioned is minute or fine chipping, and particularly in the blade materials manufactured by powder metallurgical method, the chipping is generally conspicuous. The reason fine chipping is generated can be derived from a relative weakness in toughness at blade tip portion attached to sintered blade materials.

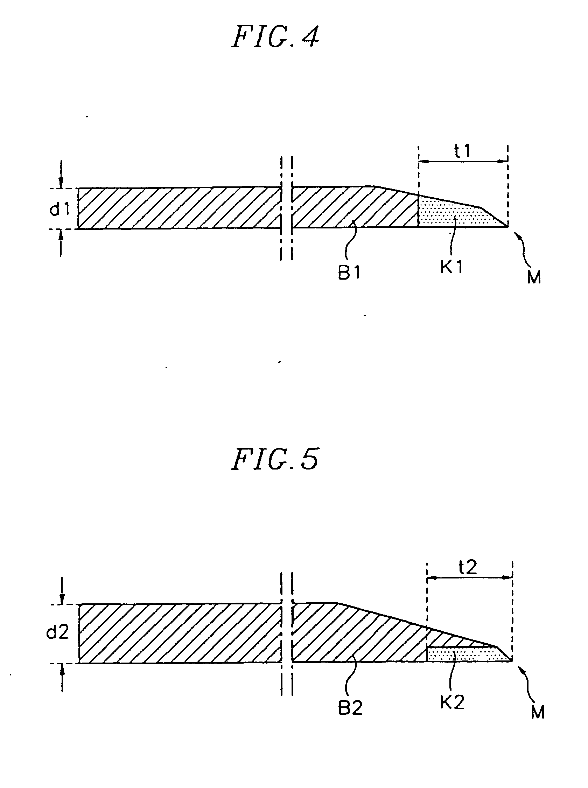

The toughness can be quantitatively measured according to large or small value of bending resistance power in a substance, such that the present inventor has measured an average value of load (P) when a specimen (A) is bent by a device illustrated in Figure 3 to thereby break down, where the value has been given as about 4.0kg/mm³.

Furthermore, identical method has been applied to a heated and forged specimen, where the average value has been listed as approximately 6.0kg/mm³, and where titanium alloy powder in the specimen (A) is shown in Example 1 for showing composition of blade materials.

Meanwhile, bending resistance strength of currently-marketed zirconic ceramic kitchen knife is approximately 3.0kg/mm³, such that the bending resistance strength of the present invention is 1.3 to 2 times larger than that of blade materials in the zirconic ceramic kitchen knife. Therefore, it can be understood that even if blade materials are used under the same condition, chipping of blade is remarkably reduced to help prolong the cutting property much longer than that of the zirconic ceramic kitchen knife.

According to the present invention thus described, pure titanium particles or titanium alloy particles containing pure titan of 50 weight % or more are mixed as media (matrix) for maintaining diamond particles or CBN particles as cutting materials. Composition in the first and second examples of blade materials used in bending resistance power test thus mentioned according to the present invention is given as below:

### Example 1

Out of blade materials 4.245g (100 weight %, volumetric ratio 100%),
diamond particles 0.875g (21 weight %, volumetric ratio 25%) and mixed alloy powder (pure Ti powder : 6A1 4V alloy powder = mixed powder of 9 : 1) 3.37g (79 weight %, volumetric ratio 75%)

### Example 2

Composition weight ratio of mixed alloy powder in the Example 1 is changed to:
Pure Ti powder : Ni powder = 50.1 : 49.9,
where volumetric ratio of mixed alloy powder relative to entire weight of blade materials is 75%.

Up to now, description has been made on kinds of composition and mixed ratio contained in the blade materials according to the present invention, citing some examples. According to the present invention, the composition is packed as desired, compressively formed and sintered in vacuum furnace or in inert gas furnace, where blade attachment process is performed on the sintered materials to produce the product.

A sintering temperature in this case which is a temperature necessary for avoiding property change of diamond, CBN or mixed titanium alloy is generally preferred to be less than 1300°C, but it should be noted that the temperature can slightly vary according to structure of furnace body and other conditions.

Figure 4 illustrates a sectional view of paper cutter as one applied example of blade materials according to the present invention, where blade height (t1) of blade materials (K1) into which diamond is inserted relative to blade plate portion (B1) having a thickness (d1) of 1.5mm is 10mm. Composition of blade plate portion (B1) is pure titanium or above-mentioned titanium alloy. The blade plate portion (B1) is simultaneously molded and sintered with the blade materials (K1), where blade attachment process is performed on blade tip portion of the blade materials (K1) for blade tip angle of 15°.

Figure 5 is another applied example according to the present invention, where a section surface of a cooking knife having a thick blade is illustrated and here blade height (t2) of blade materials (K2) is 10mm relative to a blade plate portion (B2) having a thickness (d2) of 3mm.

Thickness of blade materials (K2) is 0.3mm which is very thin. A section of the blade materials (K2) is roughly formed in echelon shape after blade attachment process is performed on the blade tip portion, as illustrated in Figure 5.

Inclined angle at tapered surface is 6° while blade tip angle is 15° which is the same as the above example.

In manufacturing a cooking knife having a thick blade as illustrated, the blade materials (K2) containing the above diamond and having a rectangular section of 10 mm X 0.3mm size are inserted in charged with pure titanium powder or titanium alloy powder which are compositions of the blade plate portion (B2), molded and sintered. A blade attachment process is performed on a portion corresponding to a blade tip.

As mentioned above, in manufacturing the blade materials according to the present invention, diamond particles or CBN parcels, each having a particle size less than 100µm are molded along with pure titanium particles or titanium alloy particles containing pure titanium particles of 50 weight % or more and sintered. The sintered materials is performed with blade attachment process. The pure titanium or titanium alloy functions as matrix (media) for strongly securing the diamond particles or CBN particles during sintering process.

For grinding the sintered materials to make blades, an ordinary wetting materials used for grinding common metal blades should be utilized in order not to lose diamond particles or CBN particles held by the matrix as few as possible. By this, diamond or CBN particles are arranged at the blade tip after the blade attachment process on a straight line within a scope of approximate maximum width of 100µm. The diamond particles or CBN particles serve as cutting agent for cutting tissues or cells of organisms, such that a much sharper cutlery than that of special steel or ceramic can be obtained.

Furthermore, according to the present invention, between the diamond particles or CBN particles there exists sintered materials of titanium alloy or pure titanium as matrix thereof, such that there is little chance of blade break such as chipping or the like due to the sintered materials's remarkably higher bending resistance strength than that of ceramic. The sharpness durability is much longer in comparison with other cutlery such as sintered steel products, special alloy products or ceramic products.

As apparent from the foregoing, there is an advantage in the blade materials according to the present invention thus described in that the materials are utterly stainless, light, good at cutting, much durable than any other existing blade materials.

There is another advantage in that the blade materials according to the present invention contain a sizable amount of pure titanium or titanium alloy, and blade plate portion of kitchen knife or the like is formed with pure titanium or titanium alloy which is the same materials as the blade materials according to the present invention as per the applied examples and simultaneously only the blade tip portion is tipped with smaller dimension of blade materials according to the present invention, such that cutlery having an excellent cutting property and good durability of cutting property can be obtained at a lower cost.

## Claims

1. A blade incorporating a material containing diamond or cubic boron nitride particles, each having size of less than 100µm in a matrix phase containing Ti, **characterized in that** said material consists of diamond or cubic boron nitride particles compressively formed within pure titanium particles or titanium alloy particles containing pure titanium of 50 weight percent or more serving as matrix to form a sintered material, and said sintered material is performed with a blade attachment process to form a straight blade tip having diamond particles or cubic boron nitride particles arranged on an approximately straight line along said blade tip.

2. A blade according to claim 1, **characterized in that** the sintered material is performed with blade attachment process at a sintering temperature preferred to be less than 1300°C.

3. A blade according to claim 1 or 2, **characterized in that** the mixing ratio of diamond particles or CBN particles is between 5~50 weight % against the total weight of the blade.

## Patentansprüche

1. Klinge, enthaltend ein Material, das Teilchen aus Diamant oder kubischem Bornitrid, jeweils mit einer Größe von weniger als 100 µm, in einer Ti enthaltenden Matrixphase enthält, **dadurch gekennzeichnet, dass** das Material aus Teilchen aus Diamant oder kubischem Bornitrid besteht, die unter Druck innerhalb reiner Titan-Teilchen oder reines Titan zu 50 Gewichtsprozent oder mehr enthaltender Titanlegierungs-Teilchen gebildet sind, die als Matrix dienen, um ein gesintertes Material zu bilden, und das gesinterte Material mit einem Anbringungsverfahren an der Klinge produziert wird, um eine gerade Klingenspitze mit Diamantteilchen oder Teilchen aus kubischem Bornitrid zu bilden, die auf einer ungefähr geraden Linie entlang der Klingenspitze angeordnet sind.

2. Klinge nach Anspruch 1, **dadurch gekennzeichnet, dass** das gesinterte Material bei einer Sintertemperatur von vorzugsweise weniger als 1300°C mit einem Anbringungsverfahren an der Klinge produziert wird.

3. Klinge nach Anspruch 1 oder 2, **dadurch gekennzeichnet, dass** das Mischverhältnis von Diamantteilchen oder CBN-Teilchen zwischen 5-50 Gew.-%, bezogen auf das Gesamtgewicht der Klinge, beträgt.

## Revendications

1. Lame comprenant un matériau contenant des particules de diamant ou de nitrure de bore cubique, ayant chacune une taille inférieure à 100 µm, dans une phase de matrice contenant du Ti, **caractérisée en ce que** ledit matériau est constitué de particules de diamant ou de nitrure de bore cubique formées par compression à l'intérieur de particules de titane pur ou de particules d'alliage de titane contenant du titane pur à raison de 50 pour cent en poids ou plus, servant de matrice, pour la formation d'un matériau fritté, et ledit matériau fritté est réalisé avec un procédé d'attachement de lame pour former une pointe de lame droite ayant des particules de diamant ou des particules de nitrure de bore cubique agencées sur une ligne sensiblement droite le long de ladite pointe de lame.

2. Lame selon la revendication 1, **caractérisée en ce que** ledit matériau fritté est réalisé avec un procédé d'attachement de lame à une température de frittage préférée qui est inférieure à 1300°C.

3. Lame selon la revendication 1 ou 2, **caractérisée en ce que** la proportion de mélange des particules de diamant ou des particules de CBN est comprise entre 5 et 50 % en poids par rapport au poids total de la lame.
